(19) Europäisches Patentamt
European Patent Office
Office européen des brevets

(11) **EP 4 746 284 A1**

(12) **EUROPEAN PATENT APPLICATION**
published in accordance with Art. 153(4) EPC

(43) Date of publication:
**20.05.2026 Bulletin 2026/21**

(21) Application number: **24839444.7**

(22) Date of filing: **19.06.2024**

(51) International Patent Classification (IPC):
***H02P 25/03*** *(2016.01)*

(52) Cooperative Patent Classification (CPC):
**H02P 25/03**

(86) International application number:
**PCT/JP2024/022183**

(87) International publication number:
**WO 2025/013548 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.07.2023 JP 2023113850**

(71) Applicant: **DENSO CORPORATION
Kariya-city, Aichi 448-8661 (JP)**

(72) Inventor: **SUZUKI, Takashi
Kariya- city, Aichi 4488661 (JP)**

(74) Representative: **Kuhnen & Wacker
Patent- und Rechtsanwaltsbüro PartG mbB
Prinz-Ludwig-Straße 40A
85354 Freising (DE)**

(54) **ROTARY ELECTRIC MACHINE CONTROL DEVICE AND PROGRAM**

(57) A control apparatus (30) is applicable to a system that includes (i) a rotary electric machine (40) including a stator (50) equipped with a stator winding (52) and a rotor (60) equipped with a field winding (70) and (ii) an inverter (20). The rotary electric machine is configured such that application of a high-frequency voltage to the stator winding induces a voltage in the field winding, resulting in a field current flowing therethrough. The control apparatus includes a switch controller (109) configured to execute switching control of the inverter to apply, to the stator winding, a combined voltage of the high-frequency voltage and a fundamental voltage with a frequency lower than a frequency of the high-frequency voltage. The control apparatus includes an adjustment unit (102, 121, 130) configured to execute an adjustment task of adjusting an excitation voltage component for the field winding included in the combined voltage to cause an output voltage of the inverter to be equal to or lower than a predetermined limit value.

FIG.5

EP 4 746 284 A1

# EP 4 746 284 A1

**Description**

CROSS REFERENCE TO RELATED APPLICATION

This application is based on and claims the benefit of priority from Japanese Patent Application No. 2023-113850 filed on July 11 2023, the disclosure of which is incorporated in its entirety herein by reference.

TECHNICAL FIELD

The present disclosure relates to apparatuses and program programs for controlling a rotary electric machine.

BACKGROUND

Conventional systems include a rotary electric machine equipped with a stator that includes stator windings, and a first power converter electrically connected to the stator windings. The rotary electric machine includes a rotor that includes a rotor equipped with a field winding. The conventional systems include a second power converter for causing a field current to flow into the field winding. Such a conventional system is disclosed in, for example, patent literature 1.

CROSS-REFERENCES

Patent Literature 1 Japanese Patent Application Publication No. H05-30774

SUMMARY

The conventional system requires the second power converter in addition to the first power converter, making the system configuration complex. Additionally, the conventional system is configured to reduce the field current when the voltage across the first power converter reaches a limit value. This configuration may lead to a time delay before the voltage across the first power converter begins to decrease after reaching the limit value.

The present disclosure seeks to provide apparatuses and program programs for controlling a rotary electric machine, each of which enables a simpler system configuration.

The present disclosure provides a control apparatus applicable to a system that includes (i) a rotary electric machine including a stator equipped with a stator winding and a rotor equipped with a field winding and (ii) an inverter electrically connected to the stator winding, the rotary electric machine being configured such that application of a high-frequency voltage to the stator winding induces a voltage in the field winding, resulting in a field current flowing therethrough. The control apparatus includes a switch controller configured to execute switching control of the inverter to apply, to the stator winding, a combined voltage of the high-frequency voltage and a fundamental voltage with a frequency lower than a frequency of the high-frequency voltage. The control apparatus includes an adjustment unit configured to execute an adjustment task of adjusting an excitation voltage component for the field winding included in the combined voltage to cause an output voltage of the inverter to be equal to or lower than a predetermined limit value.

The rotary electric machine disclosed in the present disclosure is configured such that application of a high-frequency voltage to the stator winding induces a voltage in the field winding, resulting in a field current flowing therethrough. The switch controller executes the switching control of the inverter to apply, to the stator winding, the combined voltage of the high-frequency voltage and the fundamental voltage with the frequency lower than that of the high-frequency voltage; the fundamental voltage is to generate torque in the rotary electric machine. This eliminates the need of providing, except for the inverter, additional power converters for causing a field current to flow through the field winding, making it possible to simplify the system configuration.

Additionally, the present disclosure executes the adjustment task of adjusting the excitation voltage component for the field winding included in the combined voltage to cause the output voltage of the inverter to be equal to or lower than the predetermined limit value. This makes it possible to prevent magnetic flux of the rotor from excessively increasing and therefore expand the high-frequency side operating region of the rotary electric machine. Adjusting the excitation voltage component for the field winding included in the combined voltage enables the output voltage of the inverter to rapidly decrease.

BRIEF DESCRIPTION OF THE DRAWINGS

Other aspects of the present disclosure will become apparent from the following description of embodiments with reference to the accompanying drawings in which:

2

Fig. 1 is an overall configuration of a control system for a rotary electric machine according to the first embodiment;

Fig. 2 is a diagram illustrating a configuration of an inverter and its peripheral components;

Fig. 3 is a transverse cross-sectional view of a rotor and a stator;

Fig. 4 is a diagram illustrating an electric circuit of the rotor;

Fig. 5 is a block diagram illustrating a torque control task of a control apparatus of the first embodiment;

Fig. 6A is a graph illustrating transition of a fundamental current;

Fig. 6B is a graph illustrating a high-frequency current (harmonic current);

Fig. 7 is a graph illustrating an operating region of the rotary electric machine;

Fig. 8 is a block diagram illustrating a task of calculating, by the control apparatus, a d-axis high-frequency command current;

Fig. 9 is a flowchart illustrating a procedure of calculating the d-axis high-frequency command current;

Fig. 10 is a block diagram illustrating a torque control task of a control apparatus according to the second embodiment;

Figs. 11A to 11C are graphs that illustrate map information that defines an amplitude and a variation frequency of the d-axis high-frequency command current;

Fig. 12 is a flowchart illustrating a procedure of calculating the d-axis high-frequency command current;

Fig. 13 is a block diagram illustrating a task of calculating, by the control apparatus, the d-axis high-frequency command current according to the third embodiment;

Fig. 14 is a block diagram illustrating a torque control task of a control apparatus according to the fourth embodiment;

Fig. 15 is a block diagram illustrating a task of calculating an inductance reduction current;

Fig. 16 is a flowchart illustrating a procedure of the task of calculating the inductance reduction current;

Fig. 17 is a flowchart illustrating a procedure of a torque control task according to the fifth embodiment;

Fig. 18 is a block diagram illustrating a gain adjustment task according to the sixth embodiment;

Fig. 19 is a diagram illustrating a relationship between an amplitude and a gain of a d-axis high-frequency current;

Fig. 20 is a block diagram illustrating a gain adjustment task according to the seventh embodiment; and

Fig. 21 is a diagram illustrating a relationship between an amplitude and a gain of a d-axis high-frequency current.

## DETAILED DESCRIPTION OF EMBODIMENTS

The following describes exemplary embodiments of the present disclosure with reference to the accompanying drawings. Parts of the embodiments functionally or structurally corresponding to each other or associated with each other will be denoted by the same reference numbers or by reference numbers which are different in the hundreds place from each other. The corresponding or associated parts may refer to the explanation in the other embodiments.

First embodiment

The following describes the first embodiment, which is created by implementing (i) one of rotary electric machines according to the present disclosure and (ii) one of control apparatuses according to the present disclosure, with reference to the accompanying drawings. The rotary electric machine and the control apparatus constitute a rotary-electric machine drive system, and the rotary-electric machine drive system is installed in a vehicle. The rotary electric machine serves as a drive source for the vehicle.

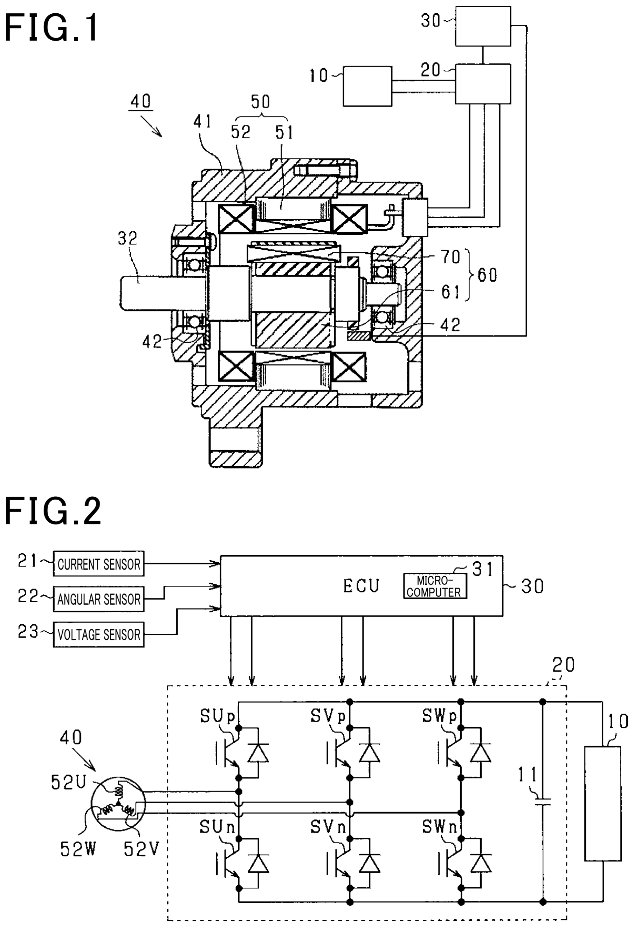

As illustrated in Fig. 1, the control system includes a direct-current (DC) power supply 10, an inverter 20, a control apparatus 30, and a rotary electric machine 40. The rotary electric machine 40 is a self-excited field-winding synchronous machine. For example, the rotary electric machine 40, the inverter 20, and the control apparatus 30 may be integrated to constitute an electromechanical integrated drive unit, or the rotary electric machine 40, the inverter 20, and the control apparatus 30 may be provided as separate components.

The rotary electric machine 40 includes a housing 41, a stator 50, and a rotor 60. The stator 50 and rotor 60 are accommodated in the housing 41. In the rotary electric machine 40 of the first embodiment, the rotor 60 is arranged radially inward of the stator 50, so that the rotary electric machine 40 is configured as an inner-rotor rotary electric machine.

The stator 50 is equipped with a stator core 51 and a stator winding 52. The stator winding 52 includes U-, V-, and W-phase windings that are, for example, made of copper wire and arranged displaced by an electrical angle of 120° from one another.

The rotor 60 is equipped with a rotor core 61 and a field winding 70. The field winding 70 is, for example, made of aluminum wire, copper wire, or CNT (carbon nanotube). A rotating shaft 32 is disposed so as to extend through a center hole of the rotor core 61. The rotating shaft 32 is rotatably supported by the housing 41 via bearings 42.

As illustrated in Fig. 2, the inverter 20 includes U-, V-, and W-phase series-connected switch units for the respective three-phases of the rotary electric machine 40. The series-connected switch unit for the U-phase is comprised of an upper-arm switch SUp and a lower-arm switch SUn connected in series to each other. The series-connected switch unit for the V-phase is comprised of an upper-arm switch SVp and a lower-arm switch SVn connected in series to each other. The series-connected switch unit for the W-phase is comprised of an upper-arm switch SWu and a lower-arm switch SWn connected in series to each other. Each of the U-, V-, and W-phase windings has opposing first and second ends. The first end of each of the U-, V-, and W-phase windings is connected to a connection point between the upper-arm switches of the corresponding one of the U-, V-, and W-phases. The second ends of the U-, V-, and W-phase windings are connected to one another in a star (Y) connection. The first embodiment uses, as each of the upper- and lower-arm switches SUp to SWn, an Insulated Gate Bipolar Transistor (IGBT). Freewheel diodes are connected in antiparallel to the respective switches SUp to SWn.

The collector terminals of the U-, V-, and W-phase upper-arm switches SUp, SVp, SWp are connected to the positive terminal of the DC power supply 10. The emitter terminals of the U-, V-, and W-phase lower-arm switches SUn, SVn, SWn are connected to the negative terminal of the DC power supply 10. A smoothing capacitor 11 is connected in parallel with the DC power supply 10.

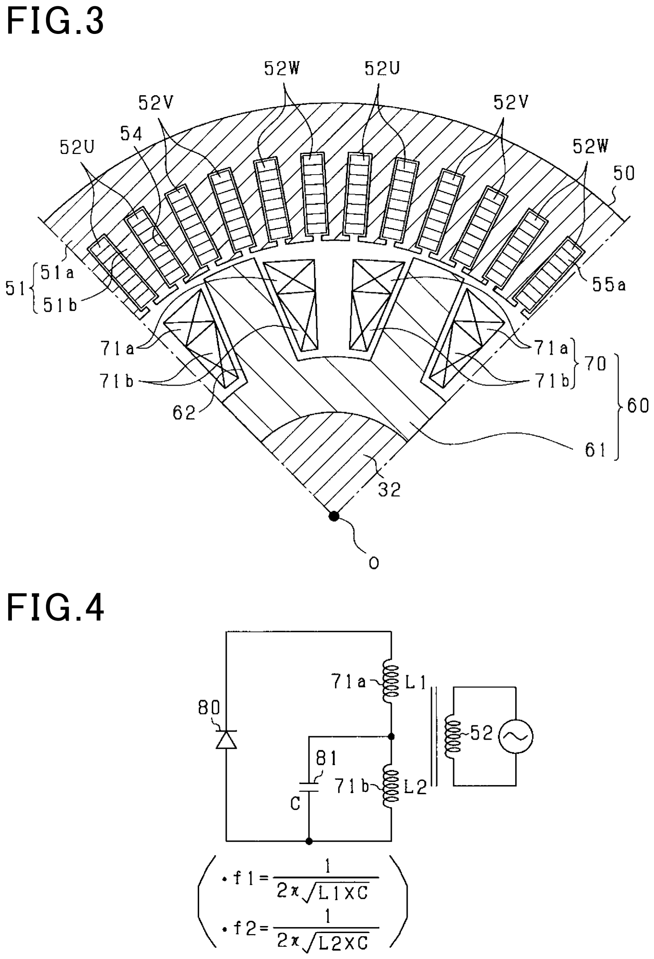

Next, the following describes the stator 50 and the rotor 60 with reference to Fig. 3.

Both the stator 50 and the rotor 60 are arranged coaxially with the rotating shaft 32 (specifically, on a rotation center axis O). In the following description, a direction in which the rotating shaft 32 extends is referred to as an axial direction, directions extending radially from the center of the rotating shaft 32 are referred to as radial directions, and a circumferential direction around the rotating shaft 32 is referred to as a circumferential direction.

The stator 50 is formed of laminated steel sheets made of a soft magnetic material, and includes an annular back yoke 51a and a plurality of teeth 51b protruding radially inward from the back yoke 51a. A plurality of slots 54 are each formed between a corresponding pair of adjacent teeth 51b, and the slots 54 are arranged in the circumferential direction. Accommodating the phase windings into corresponding slots 54 in a predetermined order enables the stator winding 52 to be constituted.

The rotor 60 is made of a soft magnetic material and is formed of, for example, laminated steel sheets. The rotor 60 includes a cylindrical rotor core 61 and a plurality of main pole portions 62 protruding radially outward from the rotor core 61. In the first embodiment, eight main pole portions 62 are provided at equal intervals in the circumferential direction.

The field winding 70 includes a first winding portion 71a and a second winding portion 71b for each main pole portion 62. The first winding portion 71a of the field winding 70 is wound around a radially outside of each main pole portion 62, and the second winding portion 71b of the field winding 70 is wound around a radially inner side of each main pole portion 62 relative to the first winding portion 71a. In each main pole portion 62, the winding directions of the first winding portion 71a and the second winding portion 71b are the same. Additionally, the winding directions of the winding portions 71a and 71b wound around one main pole portion 62 of each adjacent pair of main pole portions 62 are opposite to the winding direction of the winding portions 71a and 71b wound around the other main pole portion 62 of the corresponding adjacent pair of main pole portions 62. Accordingly, magnetization directions of main pole portions 62 adjacent in the circumferential direction are opposite to each other.

Fig. 4 illustrates an electric circuit of the rotor 60 including the first and second winding portions 71a and 71b wound around a common main pole portion. The first winding portion 71a shown in Fig. 4 is a series connection of the first winding portions 71a wound around the respective main pole portions 62, and the second winding portion 71b shown in Fig. 4 is a series connection of the second winding portions 71b wound around the respective main pole portions 62.

The rotor 60 includes a diode 80 as a rectifier and a capacitor 81. The diode 80 is electrically connected in parallel with a series connection member of (i) the series connection of the first winding portions 71a and (ii) the series connection of the second winding portions 71b. More specifically, the series connection of the first winding portions 71a, which is referred to as a first series-connected winding 71a, has opposing first and second ends, and the series connection of the second winding portions 71b, which is referred to as a second series-connected winding 71b, has opposing first and second ends. Then, the first end of the first series-connected winding 71a is connected to the cathode of the diode 80, the second end of the first series-connected winding 71a is connected to the first end of the second series-connected winding 71b, and the second end of the second series-connected winding 71b is connected to the anode of the diode 80.

The capacitor 81 is electrically connected in parallel with the second series-connected winding 71b. In Fig. 4, L1 indicates the inductance of the first series-connected winding 71a, L2 indicates the inductance of the second series-connected winding 71b, and C indicates the capacitance across the capacitor 81.

The first series-connected winding 71a and the capacitor 81 connected in series thereto constitute a series resonant circuit according to the first embodiment. Additionally, the second series-connected winding 71b and the capacitor 81 connected in parallel therewith constitute a parallel resonant circuit according to the first embodiment. In Fig. 4, f1 indicates a first resonant frequency that is a resonant frequency of the series resonant circuit, and f2 indicates a second resonant frequency that is a resonant frequency of the parallel resonant circuit.

Alternatively, the anode of the diode 80 may be connected to the first end of the first series-connected winding 71a, and the cathode of the diode 80 may be connected to the second end of the second series-connected winding 71b.

As illustrated in Fig. 2, the control system includes a current sensor 21, an angle sensor 22, and voltage sensors 23. The current sensor 21 measures, among three-phase currents flowing in the rotary electric machine 40, at least two-phase currents. The angle sensor 22 measures a rotational angle, i.e., a rotational electrical angle, of the rotor 60. The voltage sensors 23 of the first embodiment includes a first voltage sensor that measures a voltage of the DC power supply 10 and a second voltage sensor that measures an output voltage of each phase of the inverter 20, i.e., each-phase voltage of the inverter 20. Measurements of the sensors 21 to 23 are input to the control apparatus 30.

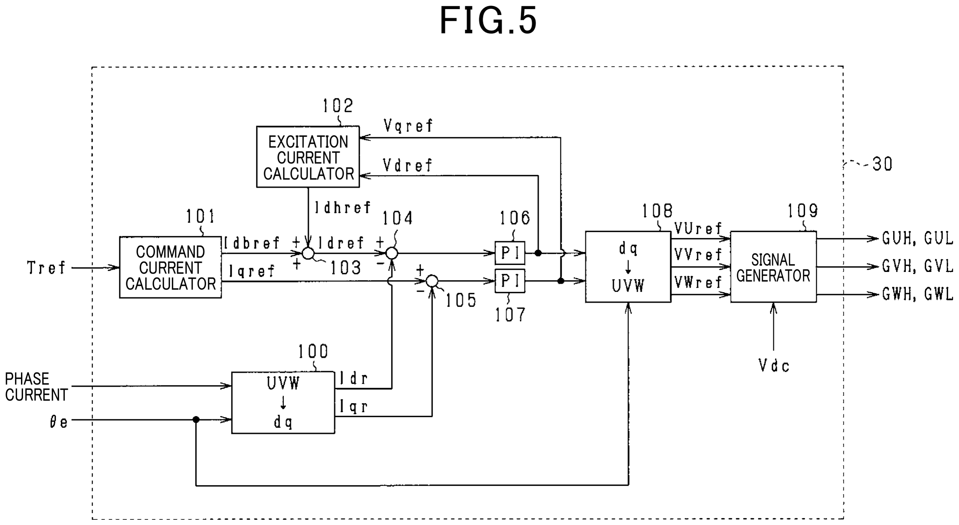

The control apparatus 30 is an electronic control unit (ECU) mainly comprised of a microcomputer 31. The microcomputer 31 includes a CPU (Central Processing Unit). The functions provided by the microcomputer 31 may be implemented by software stored in a tangible memory device and a computer that executes the software, by software alone, by hardware alone, or by a combination of hardware and software. For example, when the microcomputer 31 is provided by a hardware electronic circuit, the microcomputer 31 can be implemented by a digital circuit including a large number of logic circuits or by an analog circuit. For example, the microcomputer 31 executes programs stored in a non-transitory tangible storage medium serving as a storage unit included therein. The programs include, for example, programs of routines illustrated in, for example, Figs. 5, 7, 8 described later.

Executing a set of instructions constituting any of the program enables a method corresponding to the program to be executed. The storage unit is, for example, a nonvolatile memory. The programs stored in the storage unit can be updated through a communication network, such as the Internet, including Over-the-Air (OTA) updates.

The control apparatus 30 generates drive signals for turning on or off the switches SUp to SWn constituting the inverter 20. More specifically, the control apparatus 30 generates drive signals for turning on or off the arm switches SUp to SWn and supplies the generated drive signals to the gates of the respective arm switches SUp to SWn, thus converting DC power output from the DC power supply 10 to the inverter 20 into alternating-current (AC) power and supplying the AC power to the U-, V-, and W-phase windings 52U, 52V, 52W. This makes it possible to alternately turn on the upper- and lower-arm switches for each phase individually with a dead time interposed therebetween.

The control apparatus 30 turns on or off the switches SUp to SWn to accordingly cause a combined current of a fundamental-wave current and a harmonic current, i.e., a high-frequency current, having a frequency higher than that of the fundamental-wave current to flow through each of the phase windings 52U, 52V, 52W; the harmonic current is also referred to as a harmonic excitation current. The fundamental-wave current is a current mainly for generating torque in the rotary electric machine 40. The harmonic current is a current mainly for exciting the field winding 70 to induce a field current in the field winding 70. The combined currents flowing through the respective phase windings 52U, 52V, 52W, which are also referred to as phase currents, are shifted from one another by 120° in electrical angle.

The following describes torque control of the rotary electric machine 40 executed by the control apparatus 30 with reference to Fig. 5.

The control apparatus 30 includes a two-phase converter 100 that converts the phase currents, i.e., U-, V-, and W-phase currents, in a predetermined three-phase stationary coordinate system into a d-axis current $I_{dr}$ and a q-axis current $I_{qr}$ in a two-phase rotating coordinate system, i.e., a dq coordinate system, based on measurement values of the current sensor 21 and an electrical angle $\theta_e$ measured by the angle sensor 22.

The control apparatus 30 includes a command current calculator 101 that calculates a d-axis fundamental command current $I_{dbref}$ and a q-axis command current $I_{qref}$ based on a command torque $T_{ref}$.

The d-axis fundamental command current $I_{dbref}$ and the q-axis command current $I_{qref}$ are command values of DC components corresponding to the fundamental-wave current. The command current calculator 101 may calculate the d-axis fundamental command current $I_{dbref}$ and the q-axis command current $I_{qref}$ based on, for example, the input command torque $T_{ref}$ and map information in which values of the command torque $T_{ref}$, values of the d-axis fundamental command current $I_{dbref}$, and values of the q-axis command current $I_{qref}$ are associated with one another

The control apparatus 30 includes an excitation current calculator 102 that calculates a d-axis high-frequency command current $I_{dhref}$.

The d-axis high-frequency command current $I_{dhref}$ is a command value of an AC component corresponding to the harmonic current for exciting the field winding 70. The d-axis high-frequency command current $I_{dhref}$ according to the first embodiment is expressed by the following equation (eq1):

$$I_{dhref} = I_{damp} \cdot \sin(2\pi \cdot f_h \cdot t) \cdots (eq1)$$

where:

$I_{damp}$ denotes an amplitude of the d-axis high-frequency command current $I_{dhref}$; and
$f_h$ denotes a variation frequency of the d-axis high-frequency command current $I_{dhref}$. The excitation current calculator 102 may calculate the amplitude $I_{damp}$ of the d-axis high-frequency command current $I_{dhref}$ such that the amplitude of the harmonic current is 3% or more of the amplitude of the fundamental-wave current.

The control apparatus 30 includes a superposition unit 103 that superimposes the d-axis high-frequency command current $I_{dhref}$ on the d-axis fundamental command current $I_{dbref}$ to thereby calculate a d-axis command current

$I_{dref}$.

The control apparatus 30 includes a d-axis deviation calculator 104 that subtracts the d-axis current $I_{dr}$ from the d-axis command current $I_{dref}$ to accordingly calculate a d-axis current deviation $\Delta I_d$.

The control apparatus 30 includes a q-axis deviation calculator 105 that subtracts the q-axis current $I_{qr}$ from the q-axis command current $I_{qref}$ to accordingly calculate a q-axis current deviation $\Delta I_q$.

The control apparatus 30 includes a d-axis current control unit 106 that calculates a d-axis voltage command value $V_{dref}$ as a manipulated variable for feedback control of the d-axis current $I_{dr}$ to the d-axis command current $I_{dref}$, based on the d-axis current deviation $\Delta I_d$.

The control apparatus 30 includes a q-axis current control unit 107 that calculates a q-axis voltage command value $V_{qref}$ as an operation amount for feedback-controlling the q-axis current $I_{qr}$ to the q-axis command current $I_{qref}$, based on the q-axis current deviation $\Delta I_q$. As the feedback control performed by the current control units 106 and 107, proportional-integral control may be used according to the first embodiment.

The control apparatus 30 includes a three-phase conversion unit 108 that converts the d- and q-axis voltage command values $V_{dref}$ and $V_{qref}$ in the two-phase rotating coordinate system into U-, V-, and W-phase voltage command values $VU_{ref}$, $VV_{ref}$, and $VW_{ref}$ in the three-phase stationary coordinate system, based on the d- and q-axis voltage command values $V_{dref}$ and $V_{qref}$ and the electrical angle $\theta_e$. The U-, V-, and W-phase voltage command values $VU_{ref}$, $W_{ref}$, and $VW_{ref}$ have waveforms whose phases are shifted from one another by 120 degrees in electrical angle. The frequency of harmonic components included in the U-, V-, and W-phase voltage command values $VU_{ref}$, $VV_{ref}$, and $VW_{ref}$ is set to a frequency near the first resonant frequency f1 described above. Each of the U-, V-, and W-phase voltage command values is a combined voltage of a fundamental voltage corresponding to the fundamental current for the corresponding one of the U-, V-, and W-phases and a harmonic voltage corresponding to the harmonic current for the corresponding one of the U-, V-, and W-phases.

The control apparatus 30 includes a signal generator 109 that generates, based on the U-, V-, and W-phase voltage command values $VU_{ref}$, $VV_{ref}$, and $VW_{ref}$, a drive signal for each of the UVW-phase upper- and lower-arm switches SUp to SWn for causing the combined current for each of the U-, V, and W-phase to flow through the corresponding one of the U-, V-, and W-phase windings 52U, 52V, 52W of the stator winding 52. The generated drive signals are input to the respective arm switches SUp to SWn, thus executing on-off switching control of the UVW-phase upper- and lower-arm switches SUp to SWn. The signal generator 109 of the first embodiment corresponds to a switch controller.

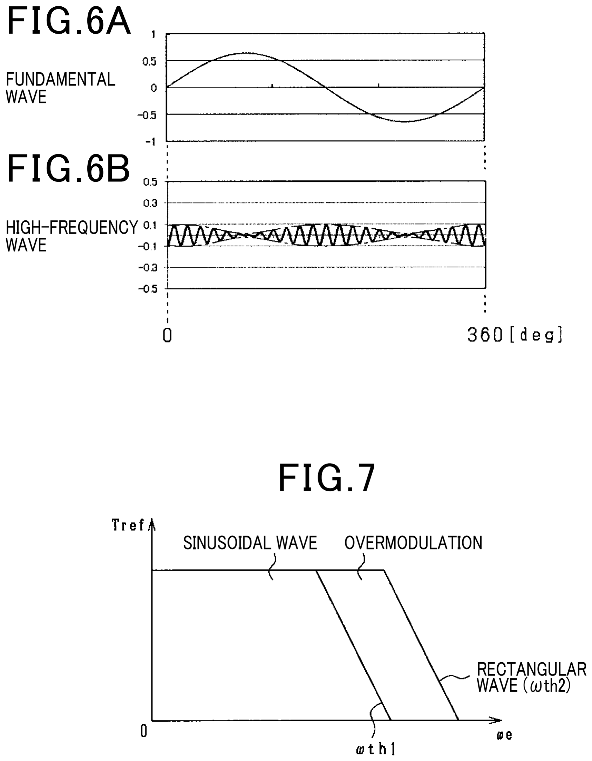

Executing on-off switching control of the UVW-phase upper- and lower-arm switches SUp to SWn of the inverter 20 causes, for each of the U-, V-, and W-phases, the combined current of the fundamental current (see Fig. 6A) and the harmonic current (see solid waveform in Fig. 6B) to flow through the corresponding one of the U-, V-, and W-phase windings 52U, 52V, 52W. The harmonic current flowing through each of the U-, V-, and W-phase windings 52U, 52V, 52W induces a field current flowing through the field winding 70.

Fig. 6A illustrates transition of the fundamental current of a representative phase over one electrical angle period. Fig. 6B illustrates an envelope of the harmonic current of the representative phase using a dashed-dotted line. The envelope of the harmonic current has the same period as the fundamental current. Values on the vertical axis in Fig. 6 represent relative magnitude relationships between the waveforms illustrated in Figs. 6A and 6B.

Fig. 7 illustrates an operating region of the rotary electric machine 40. The operation region of the rotary electric machine 40 is represented by the command torque $T_{ref}$ and an electrical angular velocity $\omega_e$ of the rotor 60 (or a rotational speed of the rotor 60). The operating region is categorized into a sinusoidal PWM control region, an overmodulation control region, and a square-wave control region, depending on the combination of the command torque and the rotational speed. The overmodulation control region is a region adjacent to a high-speed side of the sinusoidal PWM control region.

When determining that the electrical angular velocity $\omega_e$ calculated based on the electrical angle $\theta_e$ is less than a first speed threshold $\omega_{th1}$, the control apparatus 30 performs sinusoidal PWM control. The sinusoidal PWM control is switching control of the upper- and lower-arm switches SUp to SWn for converting phase voltages to be applied to the respective U-, V-, and W-phase windings 52U, 52V, 52W of the stator winding 52 into PWM voltage waveforms under a condition where the peak value of each phase voltage is determined to be lower than or equal to a terminal voltage of the DC power supply 10. The first speed threshold $\omega_{th1}$ decreases as the command torque $T_{ref}$ increases.

When determining that the electrical angular velocity $\omega_e$ is higher than or equal to the first speed threshold $\omega_{th1}$ and less than a second speed threshold $\omega_{th2}$, the control apparatus 30 performs overmodulation control. The overmodulation control is switching control of the upper- and lower-arm switches SUp to SWn for converting phase voltages to be applied to the respective U-, V-, and W-phase windings 52U, 52V, 52W of the stator winding 52 into PWM voltage waveforms having a modulation index higher than that of the PWM voltage waveforms generated by the sinusoidal PWM control under a condition where the peak value of each phase voltage is determined to exceed the terminal voltage of the DC power supply 10. The second speed threshold $\omega_{th2}$ decreases as the command torque $T_{ref}$ increases.

Note that the control apparatus 30 may determine whether a current operating point is in the overmodulation control region or in the square-wave control region, based not on the determination using the first speed threshold $\omega_{th1}$ and the second speed threshold $\omega_{th2}$ as described above but on a magnitude of an output voltage vector of the inverter 20.

Alternatively, instead of the determination using the first and second speed thresholds $\omega_{th1}$ and $\omega_{th2}$ as described above, the control apparatus 30 may determine whether the current operating point is in the overmodulation control region or the square-wave control region based on the magnitude of the output voltage vector of the inverter 20. The control apparatus 30 may calculate the magnitude of the output voltage vector based on, for example, the equation (eq2) that will be described later.

When determining that the current operating point is in the overmodulation control region or in the square-wave control region, the control apparatus 30 performs flux-weakening field control to reduce the magnetic flux of the rotor 60.

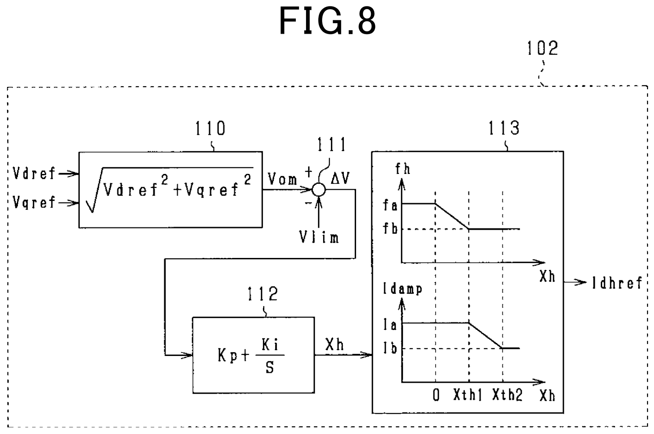

The following describes the flux-weakening field control with reference to the block diagram of the excitation current calculator 102 illustrated in Fig. 8.

The excitation current calculator 102 serves as an adjustment unit and includes a voltage amplitude calculator 110, a voltage deviation calculator 111, and a feedback controller 112.

The voltage amplitude calculator 110 calculates the voltage amplitude $V_{om}$, which is the magnitude of the output voltage vector of the inverter 20 in the two-phase rotating coordinate system, based on the d-axis voltage command value $V_{dref}$ calculated by the d-axis current control unit 106 and the q-axis voltage command value $V_{qref}$ calculated by the q-axis current control unit 107. More specifically, the voltage amplitude calculator 110 calculates the voltage amplitude $V_{om}$ based on the following equation (eq2):

$$V_{om} = \sqrt{V_{dref}^2 + V_{qref}^2} \; ... \, (eq2)$$

The voltage deviation calculator 111 calculates a voltage deviation $\Delta V$ by subtracting a limit value $V_{lim}$ from the calculated voltage amplitude $V_{om}$. The limit value $V_{lim}$ is a value determined to avoid an induced voltage (i.e., back electromotive force) generated in the stator winding 52 becoming equal to or greater than the terminal voltage of the DC power supply 10. The voltage deviation calculator 111 may determine the limit value $V_{lim}$ to be higher as the terminal voltage of the DC power supply 10 detected by the voltage sensor 23 (hereinafter, supply voltage $V_{dc}$) increases.

The feedback control unit 112 calculates a deviation amount $X_h$ as a manipulated variable for performing feedback-control of the calculated voltage deviation $\Delta V$, thus causing the calculated voltage deviation $\Delta V$ to approach 0. As the feedback control, proportional-integral control is used by the feedback control unit 112 according to the first embodiment.

The excitation current calculator 102 additionally includes an excitation parameter calculator 113. The excitation parameter calculator 113 calculates the amplitude $I_{damp}$ and the variation frequency $f_h$ of the d-axis high-frequency command current $I_{dhref}$ based on the calculated deviation amount $X_h$. The excitation parameter calculator 113 reduces the amplitude $I_{damp}$ and/or the variation frequency $f_h$ to accordingly reduce an excitation voltage component, which is a voltage component included in the combined voltage and serving as an excitation voltage component of the field winding 70. This reduction in the excitation voltage component causes the magnetic flux of the rotor 60 to decrease, thereby achieving the flux-weakening field control.

The following describes a reason why reduction in the amplitude $I_{damp}$ and/or the variation frequency $f_h$ reduces the excitation voltage component.

The following equations (eq3) and (eq4) show voltage equations of the rotary electric machine 40 that serves as a motor 40 in the two-phase rotating coordinate system:

$$V_d = R \cdot I_d + L_d \cdot \frac{d}{dt} I_d - \omega_e \cdot L_q \cdot I_q \; ... \, (eq3)$$

$$V_q = R \cdot I_q + L_q \cdot \frac{d}{dt} I_q + \omega_e \cdot L_d \cdot I_d + \omega_e \cdot \varphi \; ... \, (eq4)$$

where:

$R$ denotes a resistance value of the stator winding 52;
$L_d$ and $L_g$ denote d- and q-axis inductances; and
$\varphi$ denotes an effective value of a flux linkage of the stator winding 52.

Substituting the equation $I_d = I_{dbref} + I_{dref}$ into the above equations (eq3) and (eq4) enables the following equations (eq5) and (eq6) to be derived:

$$V_d = \left( R \cdot I_{dbref} - \omega_e \cdot L_q \cdot I_q \right)$$
$$+ \left\{ R \cdot I_{damp} \cdot \sin(2\pi \cdot f_h \cdot t) + 2\pi \cdot f_h \cdot L_d \cdot I_{damp} \cdot \cos(2\pi \cdot f_h \cdot t) \right\} \dots (eq5)$$

$$V_q = \left( R \cdot I_q + L_q \cdot \frac{d}{dt} I_q + \omega_e \cdot L_q \cdot I_{dbref} + \omega_e \cdot \varphi \right)$$
$$+ \left\{ \omega_e \cdot L_d \cdot I_{damp} \cdot \sin(2\pi \cdot f_h \cdot t) \right\} (eq6)$$

where:

In the above equations (eq5) and (eq6), the branch-enclosed terms on the right-hand sides correspond to an excitation voltage component. The excitation voltage component increases as the amplitude $I_{damp}$ and/or the variation frequency $f_h$ of the d-axis high-frequency command current $I_{dhref}$ increases. As the excitation voltage component increases, a field current flowing through the field winding 70 increases.

The following describes a method of calculating the variation frequency $f_h$. When the deviation amount $X_h$ is 0 or less, the excitation parameter calculator 113 sets the variation frequency $f_h$ to a first frequency $f_a$. When the deviation amount $X_h$ is greater than 0 and less than a first threshold $X_{th1}$, the excitation parameter calculator 113 sets the variation frequency $f_h$ to a frequency lower than the first frequency $f_a$ and higher than a second frequency $f_b$ ($< f_a$), and sets the variation frequency $f_h$ to be lower as the deviation amount $X_h$ increases. When the deviation amount $X_h$ is equal to or greater than the first threshold $X_{th1}$, the excitation parameter calculator 113 sets the variation frequency $f_h$ to the second frequency $f_b$.

Next, the following describes a method of calculating the amplitude $I_{damp}$. When the deviation amount $X_h$ is less than or equal to the first threshold $X_{th1}$, the excitation parameter calculator 113 sets the amplitude $I_{damp}$ to a first amplitude $I_a$. When the deviation amount $X_h$ is greater than the first threshold $X_{th1}$ and less than a second threshold $X_{th2}$ ($> X_{th1}$), the excitation parameter calculator 113 sets the amplitude $I_{damp}$ to an amplitude smaller than the first amplitude $I_a$ and greater than a second amplitude $I_b$ ($< I_a$), and sets the amplitude $I_{damp}$ to be smaller as the deviation amount $X_h$ increases. When the deviation amount $X_h$ is equal to or greater than the second threshold $X_{th2}$, the excitation parameter calculator 113 sets the amplitude $I_{damp}$ to the second amplitude $I_b$.

Reduction in the amplitude $I_{damp}$ causes a torque-decrease amount of the rotary electric machine 40 to increase. Accordingly, the first embodiment is configured such that the deviation amount $X_h$ for causing the variation frequency $f_h$ to start decreasing is set smaller than the deviation amount $X_h$ for causing the amplitude $I_{damp}$ to start decreasing.

For this reason, prior to the process of decreasing the amplitude $I_{damp}$, reduction in the variation frequency $f_h$ enables the magnetic flux of the rotor 60 to decrease, making it possible to reduce the field current without compromising the torque of the rotary electric machine 40.

In particular, the control apparatus 30 of the first embodiment causes the amplitude $I_{damp}$ to start decreasing when the deviation amount $X_h$ exceeds the first threshold $X_{th1}$ that is a value of the deviation amount $X_h$ at which lowering of the variation frequency $f_h$ is completed. That is, the process of decreasing the amplitude $I_{damp}$ is started when the deviation amount $X_h$ does not become 0 or less even by the process of lowering the variation frequency $f_h$. This enables the field current to reduce while suitably suppressing a decrease in torque of the rotary electric machine 40.

As described above, the excitation current calculator 102 adjusts the d-axis high-frequency command current $I_{dhref}$, thus adjusting the excitation voltage component.

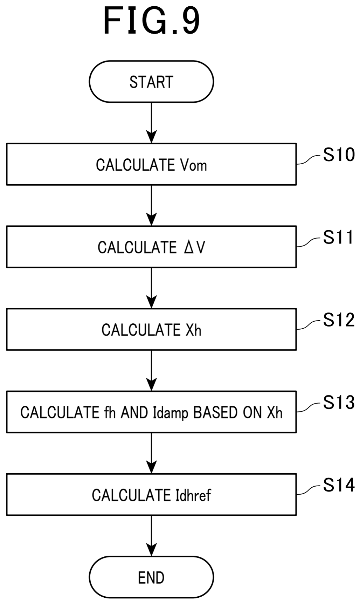

Fig. 9 illustrates a flowchart of a flux-weakening field control routine to be executed by the control apparatus 30 according to the first embodiment. The control apparatus 30 is configured to repeatedly execute the flux-weakening field control routine for example for each predetermined control cycle.

When starting the flux-weakening field control routine, the voltage amplitude calculator 110 calculates, as described above, the voltage amplitude $V_{om}$ based on the d- and q-axis voltage command values $V_{dref}$ and $V_{qref}$ in step S10.

Following the operation in step S10, the voltage deviation calculator 111 calculates, as described above, the voltage deviation $\Delta V$ based on the calculated voltage amplitude $V_{om}$ in step S11.

Next, the feedback control unit 112 calculates, as described above, the deviation amount $X_h$ based on the calculated voltage deviation $\Delta V$ in step S12.

Next, the excitation parameter calculator 113 calculates the amplitude $I_{damp}$ and the variation frequency $f_h$ of the d-axis high-frequency command current $I_{dhref}$ based on the calculated deviation amount $X_h$ in step S13.

Following the operation in step S13, the excitation parameter calculator 113 calculates, as described above, the d-axis high-frequency command current $I_{dhref}$ that is defined by the calculated amplitude $I_{damp}$ and variation frequency $f_h$ of the d-axis high-frequency command current $I_{dhref}$, and outputs the d-axis high-frequency command current $I_{dhref}$ to the superposition unit 103 in step S14.

The rotary-electric machine drive system of the first embodiment uses the self-excited field-winding rotary electric machine 40 of the first embodiment. Therefore, it is not necessary to provide, separately from the inverter 20, a power converter for energizing the field winding 70. This simplifies the configuration of the rotary-electric machine drive system.

In particular, the control apparatus 30, which performs the torque control of the rotary electric machine 40, is configured to additionally perform, in a high-speed region of the rotary electric machine 40, the flux-weakening field control to accordingly reduce the magnetic flux of the rotor 60. This therefore implements the flux-weakening field control and the torque control by switching control of the common inverter 20, thus contributing to simplifying the configuration of the rotary-electric machine drive system. Moreover, switching control of the inverter 20 enables the excitation voltage component to decrease, making it possible to rapidly reduce the output voltage of the inverter 20.

Modifications of First embodiment

The excitation parameter calculator 113 may vary, based on the deviation amount $X_h$, only the variation frequency $f_h$ selected from the amplitude $I_{damp}$ and the variation frequency $f_h$.

The excitation parameter calculator 113 may vary, based on the deviation amount $X_h$, only the amplitude $I_{damp}$ selected from the amplitude $I_{damp}$ and the variation frequency $f_h$. In this modification, the excitation parameter calculator 113 may start lowering the amplitude $I_{damp}$ when the deviation amount $X_h$ exceeds 0 in the same manner as the lowering of the variation frequency $f_h$.

Second embodiment

The following describes the second embodiment while mainly focusing on the different points from the first embodiment with reference to the accompanying drawings. The second embodiment is configured to calculate the amplitude $I_{damp}$ and the variation frequency $f_h$ of the d-axis high-frequency command current $I_{dhref}$ based on map information instead of the deviation amount $X_h$.

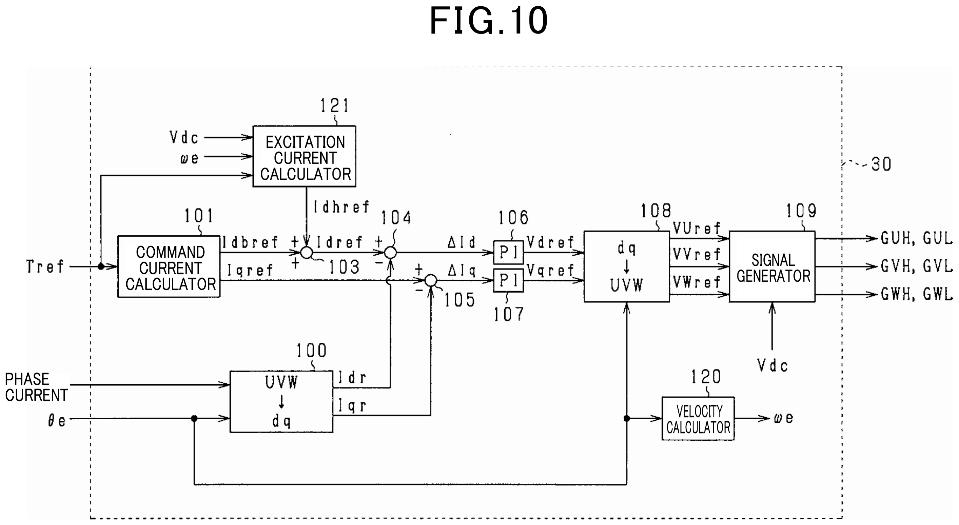

Fig. 10 is a block diagram illustrating torque control of the rotary electric machine 40 executed by the control apparatus 30 according to the second embodiment.

The control apparatus 30 includes a velocity calculator 120 that calculates the electrical angular velocity $\omega_e$ based on the electrical angle $\theta e$.

The control apparatus 30 includes an excitation current calculator 121 that serves as an adjustment unit and calculates the amplitude $I_{damp}$ and the variation frequency $f_h$ of the d-axis high-frequency command current $I_{dhref}$ based on the supply voltage $V_{dc}$, the calculated electrical angular velocity $\omega_e$, the command torque $T_{ref}$, and the map information.

The map information denotes information in which the amplitude $I_{damp}$ and the variation frequency $f_h$ are defined in association with the supply voltage $V_{dc}$, the calculated electrical angular velocity $\omega_e$, and the command torque $T_{ref}$; these parameters correspond to determination parameters. The map information is stored in the storage unit of the control apparatus 30.

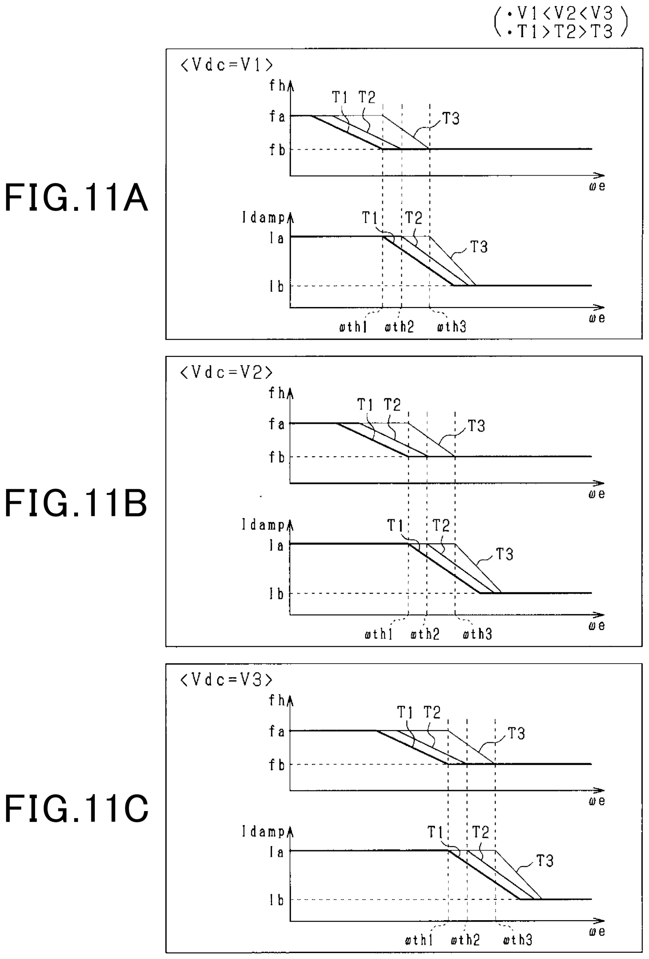

Figs. 11A, 11B, and 11C illustrate an example of the map information.

Specifically, Fig. 11A illustrates the map information when the supply voltage $V_{dc}$ is a first voltage V1, Fig. 11B illustrates the map information when the supply voltage $V_{dc}$ is a second voltage V2 (> V1), and Fig. 11C illustrates the map information when the supply voltage $V_{dc}$ is a third voltage V3 (> V2). A relationship among the first frequency $f_a$, the second frequency $f_b$, the electrical angular velocity $\omega_e$, and the speed thresholds ($\omega_{th1}$, $\omega_{th2}$, $\omega_{th3}$) is similar to the relationship among the first frequency $f_a$, the second frequency $f_b$, the deviation amount $X_h$, and the first threshold $X_{th1}$ shown in Fig. 8 described above.

Each map information includes information corresponding to cases where the command torque $T_{ref}$ is T1, T2, and T3 (T1 > T2 > T3). As the command torque $T_{ref}$ decreases, the speed thresholds ($\omega_{th1}$, $\omega_{th2}$, $\omega_{th3}$) increase. The speed thresholds $\omega_{th1}$, $\omega_{th2}$, and $\omega_{th3}$ correspond to command torque T1, T2, and T3.

Additionally, as the supply voltage $V_{dc}$ increases, the speed thresholds ($\omega_{th1}$, $\omega_{th2}$, $\omega_{th3}$) increase. Using the map information, the excitation current calculator 121 adjusts the d-axis high-frequency command current $I_{dhref}$ to accordingly adjust the excitation voltage component.

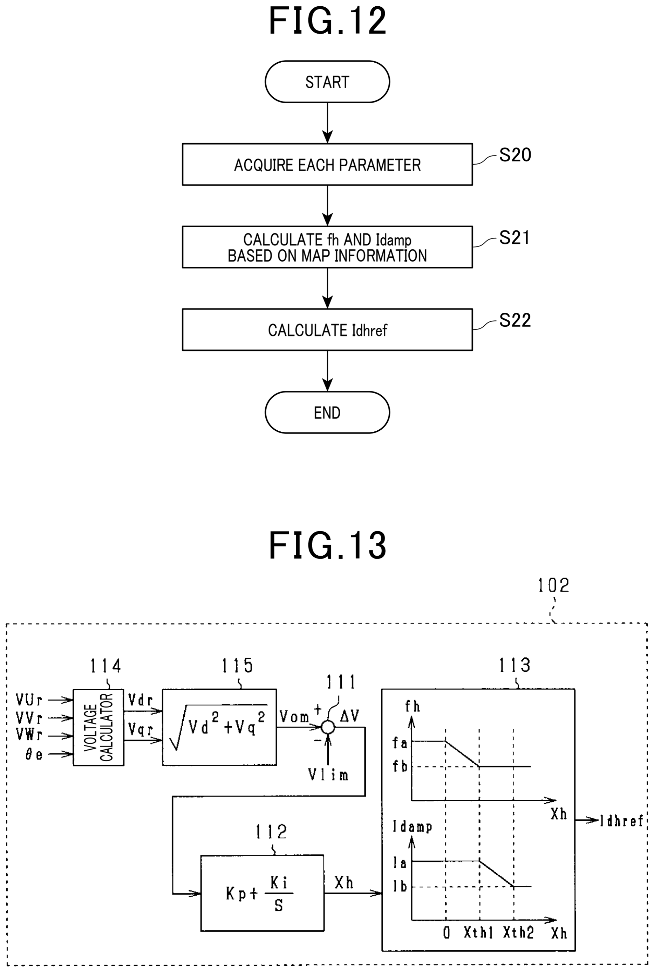

Fig. 12 illustrates a flowchart of a flux-weakening field control routine to be executed by the control apparatus 30 according to the second embodiment. The control apparatus 30 is configured to repeatedly execute the flux-weakening field control routine for example for each predetermined control cycle.

When starting the flux-weakening field control routine, the excitation current calculator 121 acquires the supply voltage $V_{dc}$, the electrical angular velocity $\omega_e$, and the command torque $T_{ref}$ in step S20.

Next, the excitation current calculator 121 calculates the variation frequency $f_h$ and the amplitude $I_{damp}$ of the d-axis high-frequency command current $I_{dhref}$ based on the acquired supply voltage $V_{dc}$, the electrical angular velocity $\omega_e$, the command torque $T_{ref}$, and the map information in step S21.

Following the operation in step S21, the excitation current calculator 121 calculates the d-axis high-frequency command current $I_{dhref}$ defined by the variation frequency $f_h$ and the amplitude $I_{damp}$ of the d-axis high-frequency command current $I_{dhref}$, and outputs the d-axis high-frequency command current $I_{dhref}$ to the superposition unit 103 in step S22.

The second embodiment described above achieves advantageous benefits of the first embodiment.

Modifications of Second embodiment

The map information used by the excitation current calculator 121 may be information in which the amplitude $I_{damp}$ and the variation frequency $f_h$ are defined in association with one or two parameters among the supply voltage $V_{dc}$, the electrical angular velocity $\omega_e$, and the command torque $T_{ref}$.

Third embodiment

The following describes the third embodiment while mainly focusing on the different points from the first embodiment with reference to the accompanying drawings. The third embodiment is configured to calculate the voltage amplitude $V_{om}$ based on U-, V-, and W-phase voltages $VU_r$, $VV_r$, and $VW_r$ measured by the voltage sensor 23.

Fig. 13 is a block diagram of an excitation current calculator 102 according to the third embodiment.

The excitation current calculator 102 includes a voltage calculation unit 114 that calculates a d-axis voltage $V_{dr}$ and a q-axis voltage $V_{qr}$ based on the electrical angle $\theta_e$ and the U-, V-, and W-phase voltages $VU_r$, $VV_r$, and $VW_r$ measured by the voltage sensor 23. Specifically, the voltage calculation unit 114 calculates the d-axis voltage $V_{dr}$ and the q-axis voltage $V_{qr}$ in accordance with the following equations (eq7) and (eq8):

$$V_{dr} = \sqrt{\frac{2}{3}}\left\{ VUr \times cos\theta_e + VVr \times \cos\left(\theta_e - \frac{2}{3}\pi\right) + VWr \times \cos\left(\theta_e + \frac{2}{3}\pi\right)\right\} \cdots (eq7)$$

$$V_{qr} = \sqrt{\frac{2}{3}}\left\{ VUr \times sin\theta_e + VVr \times \sin\left(\theta_e - \frac{2}{3}\pi\right) + VWr \times \sin\left(\theta_e + \frac{2}{3}\pi\right)\right\} \cdots (eq8)$$

The excitation current calculator 102 includes a voltage amplitude calculation unit 115 that calculates the voltage amplitude $V_{om}$ based on the calculated d-axis voltage $V_{dr}$ and q-axis voltage $V_{qr}$ in accordance with the following equation (eq9):

$$V_{om} = \sqrt{V_{dr}^2 + V_{qr}^2} \cdots (eq9)$$

The third embodiment described above achieves advantageous benefits of the first embodiment.

As a modification of the third embodiment, like the first embodiment, the excitation parameter calculator 113 may vary, based on the deviation amount $X_h$, only the variation frequency $f_h$ selected from the amplitude $I_{damp}$ and the variation frequency $f_h$.

Fourth embodiment

The following describes the fourth embodiment while mainly focusing on the different points from the first embodiment with reference to the accompanying drawings. The fourth embodiment uses a method of increasing the d-axis current to be supplied to the stator winding 52 to accordingly reduce the excitation voltage component of the field winding 70. The following describes a reason why this method can be used.

An increase in the d-axis current causes the d-axis inductance $L_d$ to decrease due to the influence of magnetic saturation. In the term enclosed in braces on the right-hand side of the above equation (eq5), the excitation voltage component becomes smaller as the d-axis inductance $L_d$ becomes smaller. Therefore, an increase in the d-axis current enables the excitation voltage component of the field winding 70 to decrease.

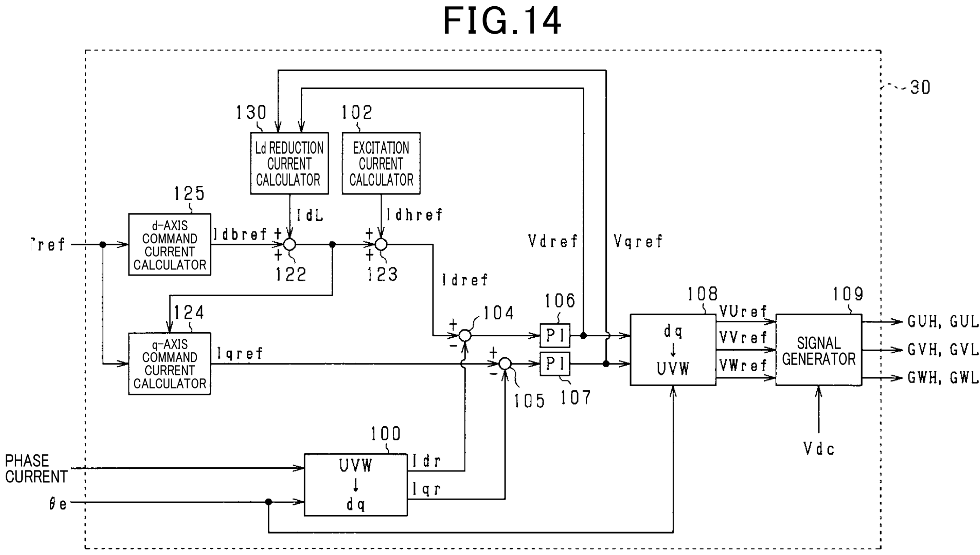

Fig. 14 is a block diagram illustrating torque control of the rotary electric machine 40 executed by the control apparatus 30 according to the fourth embodiment.

The control apparatus 30 includes a d-axis command current calculator 125 that calculates a d-axis fundamental command current $I_{dbref}$ based on the command torque $T_{ref}$. The d-axis command calculation unit 125 may calculate the d-axis fundamental command current $I_{dbref}$ based on, for example, the input command torque $T_{ref}$ and map information in which values of the command torque $T_{ref}$ and values of the d-axis fundamental command current $I_{dbref}$ are associated with one another.

The control apparatus 30 includes an inductance-reduction current calculator 130 that serves as an adjustment unit and calculates an inductance-reduction current $I_{dL}$, which is a d-axis current to be superposed on the d-axis fundamental command current $I_{dbref}$, based on the calculated d- and q-axis voltage command values $V_{dref}$ and $V_{qref}$. The inductance-reduction current $I_{dL}$ is a value of a DC component.

The control apparatus 30 includes a first addition unit 122 that calculates the sum of the d-axis fundamental command current $I_{dbref}$ and the inductance-reduction current $I_{dL}$.

The control apparatus 30 includes a second addition unit 123 that adds the sum of the d-axis fundamental command current $I_{dbref}$ and the inductance-reduction current $I_{dL}$ to the d-axis high-frequency command current $I_{dhref}$ calculated by the excitation current calculator 102 to accordingly calculate the d-axis command current $I_{dref}$. The d-axis command current $I_{dref}$ is input to the d-axis deviation calculation unit 104.

The control apparatus 30 includes a q-axis command calculation unit 124 that calculates a q-axis command current $I_{qref}$ based on the command torque $T_{ref}$ and the sum of the d-axis fundamental command current $I_{dbref}$ and the inductance-reduction current $I_{dL}$, which is referred to as ($I_{dbref}$ + $I_{dL}$), calculated by the first addition unit 122. The reason why the sum ($I_{dbref}$ + $I_{dL}$) is used to calculate the q-axis command current $I_{qref}$ is that an appropriate q-axis current corresponding to the command torque $T_{ref}$ aries depending on the magnitude of the inductance-reduction current $I_{dL}$. The q-axis command calculation unit 124 may calculate the q-axis command current $I_{qref}$ based on, for example, (i) the command torque $T_{ref}$, (ii) the sum ($I_{bref}$ + $I_{dL}$), and (iii) map information in which the command torque $T_{ref}$, the sum ($I_{dbref}$ + $I_{dL}$), and the q-axis command current $I_{qref}$ are associated. The calculated q-axis command current $I_{qref}$ is input to the q-axis deviation calculation unit 105.

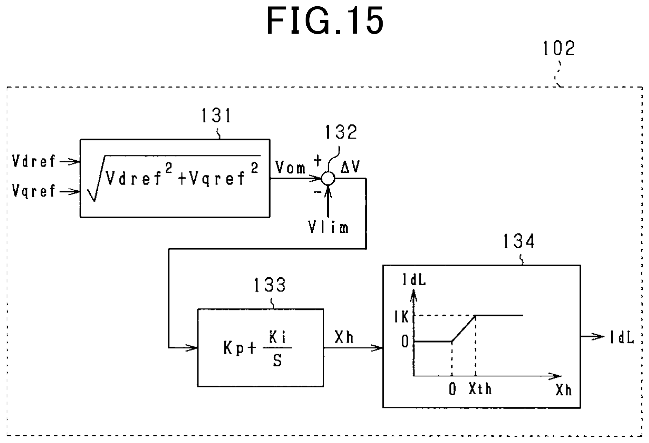

Next, the following describes a process of the inductance-reduction current calculator 130 with reference to Fig. 15.

The inductance-reduction current calculator 130 includes a voltage amplitude calculator 131, a voltage deviation calculator 132, and a feedback controller 133.

Like the voltage amplitude calculator 110, the voltage amplitude calculation unit 131 calculates the voltage amplitude $V_{om}$ based on the d-axis voltage command value $V_{dref}$ and the q-axis voltage command value $V_{qref}$.

The voltage deviation calculation unit 132 calculates the voltage deviation $\Delta V$ by subtracting the limit value $V_{lim}$ from the calculated voltage amplitude $V_{om}$.

The feedback control unit 133 calculates the deviation amount $X_h$ as a manipulated variable for performing feedback-control of the calculated voltage deviation $\Delta V$, thus causing the calculated voltage deviation $\Delta V$ to approach 0. As the feedback control, proportional-integral control is used by the feedback control unit 112 according to the fourth embodiment.

The inductance-reduction current calculator 130 additionally includes a current value calculator 134. The current value calculator 134 calculates the inductance-reduction current $I_{dL}$ based on the calculated deviation amount $X_h$. More specifically, when the deviation amount $X_h$ is 0 or less, the inductance-reduction current calculator 130 sets the inductance-reduction current $I_{dL}$ to 0.

When the deviation amount $X_h$ is greater than 0 and less than a threshold $X_{th}$, the current value calculation unit 134 sets the inductance-reduction current $I_{dL}$ to a value greater than 0 and smaller than a predetermined current IK (> 0) and sets the inductance-reduction current $I_{dL}$ to be larger as the deviation amount deviation amount $X_h$ becomes larger. Otherwise, when the deviation amount $X_h$ is equal to or greater than the threshold $X_{th}$, the current value calculation unit 134 sets the inductance-reduction current $I_{dL}$ to the predetermined current IK. This enables the inductance-reduction current calculator 130 to adjust the inductance-reduction current $I_{dL}$, thus adjusting the excitation voltage component.

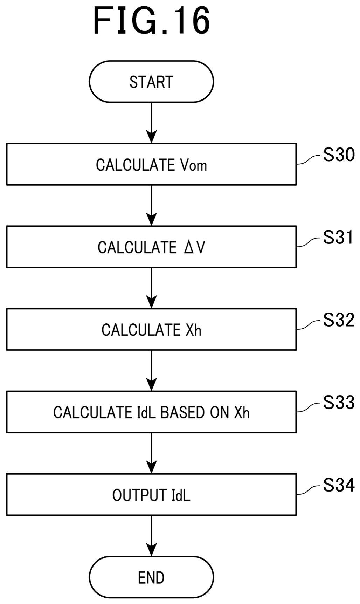

Fig. 16 illustrates a flowchart of a flux-weakening field control routine to be executed by the control apparatus 30 according to the fourth embodiment. The control apparatus 30 is configured to repeatedly execute the flux-weakening field control routine for example for each predetermined control cycle.

When starting the flux-weakening field control routine, the voltage amplitude calculation unit 131 calculates the voltage amplitude $V_{om}$ based on the d-axis voltage command value $V_{dref}$ and the q-axis voltage command value $V_{qref}$ in step S30.

Next, the voltage deviation calculation unit 132 calculates the voltage deviation $\Delta V$ based on the calculated voltage amplitude $V_{om}$ in step S31.

Following the operation in step S31, the feedback control unit 133 calculates the deviation amount $X_h$ based on the calculated voltage deviation $\Delta V$ in step S32.

Next, the current value calculation unit 134 calculates the inductance-reduction current $I_{dL}$ based on the

calculated deviation amount $X_h$ in step S33.

Following the operation in step S33, the current value calculation unit 134 outputs the calculated inductance-reduction current IdL to the first addition unit 122.

The fourth embodiment described above achieves advantageous benefits of the first embodiment.

Fifth embodiment

The following describes the fifth embodiment while mainly focusing on the different points from the first embodiment with reference to the accompanying drawings.

The control apparatus 30 of the fifth embodiment is configured to repeatedly execute, within each control cycle of the flux-weakening field control routine, a task of calculating the amplitude $I_{damp}$ and the variation frequency $f_h$ of the d-axis high-frequency command current $I_{dhref}$ to accordingly enable the voltage amplitude $V_{om}$ to be equal to or lower than the limit value $V_{lim}$.

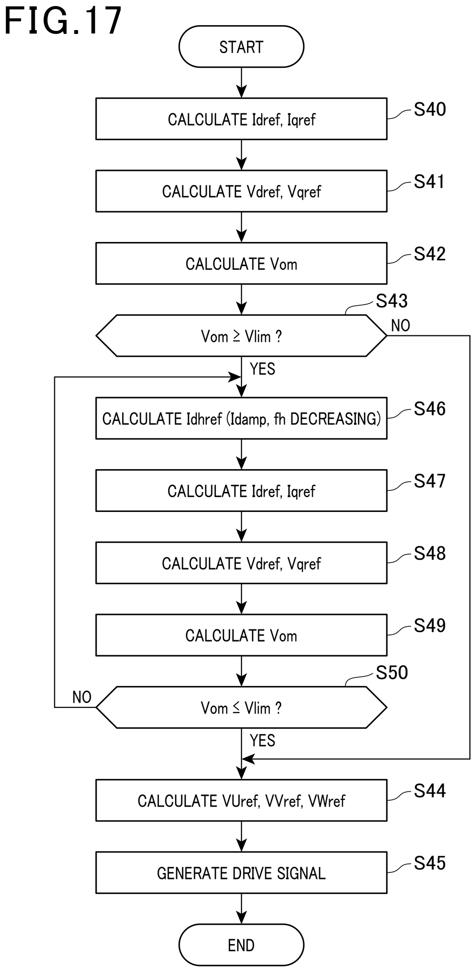

Fig. 17 illustrates a flowchart of a flux-weakening field control routine to be executed by the controller 30. The control apparatus 30 is configured to repeatedly execute the flux-weakening field control routine for example for each predetermined control cycle.

When starting the flux-weakening field control routine, the command current calculator 101, the excitation current calculator 102, and the superposition unit 103 calculate the d-axis command current $I_{dref}$ based on the d-axis fundamental command current $I_{dbref}$ and the d-axis high-frequency command current $I_{dhref}$. In addition, the command current calculator 101 calculates the q-axis command current $I_{qref}$ in step S40.

Next, the d- and q-axis deviation calculators 104 and 105 and the d- and q-axis current control units 106 and 107 respectively calculate the d- and q-axis voltage command values $V_{dref}$ and $V_{qref}$ based on the d- and q-axis command currents $I_{dref}$ and $I_{qref}$ in step S41.

Following the operation in step S41, the excitation current calculator 102 calculates the voltage amplitude $V_{om}$ based on the d-axis voltage command value $V_{dref}$ and the q-axis voltage command value $V_{qref}$ in step S42.

Next, the excitation current calculator 102 determines whether the calculated voltage amplitude $V_{om}$ is equal to or greater than the limit value $V_{lim}$ in step S43.

Upon determination that the calculated voltage amplitude $V_{om}$ is lower than the limit value $V_{lim}$ (NO in step S43), the flux-weakening field control routine proceeds to step S44.

In step S44, the three-phase conversion unit 108 calculates the U-, V-, and W-phase voltage command values $VU_{ref}$, $VV_{ref}$, and $VW_{ref}$ based on the d- and q-axis voltage command values $V_{dref}$ and $V_{qref}$ calculated in step S41 and the electrical angle $\theta_e$.

Following the operation in step S44, the signal generator 109 generates, based on the U-, V-, and W-phase voltage command values $VU_{ref}$, $VV_{ref}$, and $VW_{ref}$, the drive signal for each of the UVW-phase upper- and lower-arm switches SUp to SWn in step S45.

Otherwise, upon determination that the calculated voltage amplitude $V_{om}$ is equal to or greater than the limit value $V_{lim}$ (YES in step S43), the flux-weakening field control routine proceeds to step S46.

In step S46, the excitation current calculator 102 performs at least one of (i) a first process of decreasing the amplitude $I_{damp}$ of the d-axis high-frequency command current $I_{dhref}$ and (ii) a second process of lowering the current variation frequency $f_h$ of the d-axis high-frequency command current $I_{dhref}$.

For example, upon the first affirmative determination in step S43 after starting the flux-weakening field control routine of Fig. 17, the current amplitude $I_{damp}$ and the current variation frequency $f_h$ respectively have values used in step S40. Otherwise, in the case of a negative determination in step S50 described later, the current amplitude $I_{damp}$ and the current variation frequency $f_h$ respectively have values used in the most recent execution of step S47.

Following the operation in step S46, the command current calculator 101, the excitation current calculator 102, and the superposition unit 103 calculate the d-axis command current $I_{dref}$ based on the d-axis fundamental command current $I_{dbref}$ and the d-axis high-frequency command current $I_{dhref}$. As the amplitude $I_{damp}$ and the variation frequency $f_h$ of the d-axis high-frequency command current $I_{dhref}$ used in step S47, their values calculated in the most recent step S46 are adopted in step S47. In addition, the command current calculator 101 calculates the q-axis command current $I_{qref}$ in step S47.

Next, the d- and q-axis deviation calculators 104 and 105 and the d- and q-axis current control units 106 and 107 respectively calculate the d- and q-axis voltage command values $V_{dref}$ and $V_{qref}$ based on the d- and q-axis command currents $I_{dref}$ and $I_{qref}$ calculated in step S47 in step S48.

Following the operation in step S48, the excitation current calculator 102 calculates the voltage amplitude $V_{om}$ based on the d-axis voltage command value $V_{dref}$ and the q-axis voltage command value $V_{qref}$ calculated in the most recent step S48 in step S49.

Next, the excitation current calculator 102 determines whether the voltage amplitude $V_{om}$ calculated in step S49 is equal to or lower than the limit value $V_{lim}$ in step S50.

Upon determination that the voltage amplitude $V_{om}$ is greater than the limit value $V_{lim}$ (NO in step S50), the flux-weakening field control routine proceeds to step S46. This results in the excitation current calculator 102 performing again at least one of the first process of decreasing the amplitude $I_{damp}$ of the d-axis high-frequency command current $I_{dhref}$ and (ii) the second process of lowering the current variation frequency $f_h$ of the d-axis high-frequency command current $I_{dhref}$.

Otherwise, upon determination that the voltage amplitude $V_{om}$ is lower than the limit value $V_{lim}$ (YES in step S43), the flux-weakening field control routine proceeds to step S44.

In step S44, the three-phase conversion unit 108 calculates the U-, V-, and W-phase voltage command values $VU_{ref}$, $VV_{ref}$, and $VW_{ref}$ based on the d- and q-axis voltage command values $V_{dref}$ and $V_{qref}$ calculated in the most recent step S48 and the electrical angle $\theta_e$.

The control apparatus 30 of the fifth embodiment described above makes it possible to complete, within each control cycle of the flux-weakening field control routine, calculation of the d- and q-axis voltage command values $V_{dref}$ and $V_{qref}$ to accordingly enable the voltage amplitude $V_{om}$ to be equal to or lower than the limit value $V_{lim}$.

Sixth embodiment

The following describes the sixth embodiment while mainly focusing on the different points from the first embodiment with reference to the accompanying drawings.

The d- and q-axis current control units 106 and 107 of the sixth embodiment changes the feedback gains of the feedback control depending on an increase in the magnitude of the amplitude $I_{damp}$ of the d-axis high-frequency command current $I_{dhref}$. The d- and q-axis current control units 106 and 107 of the sixth embodiment perform the change task based on the fact that the inductance of the rotating electric machine 40 decreases as the amplitude $I_{damp}$ increases.

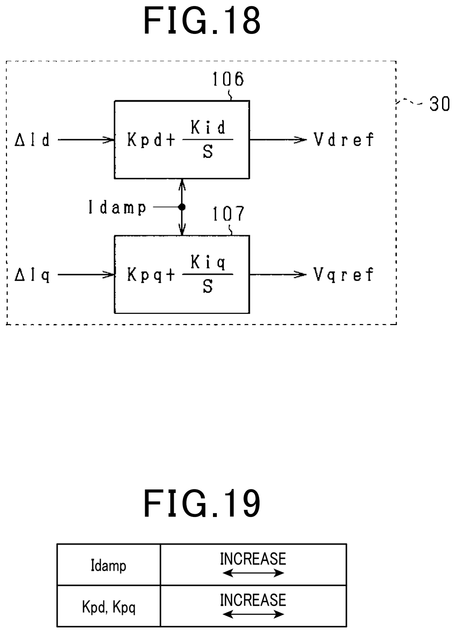

More specifically, as illustrated in Figs. 18 and 19, the d-axis current control unit 106 increases a proportional gain Kpd and an integral gain Kid used in the proportional-integral control as the amplitude $I_{damp}$ increases. The d-axis current control unit 106 may increase the proportional gain Kpd and the integral gain Kid stepwise or continuously as the amplitude $I_{damp}$ increases.

The q-axis current control unit 107 increases a proportional gain Kpq and an integral gain Kiq used in the proportional-integral control as the amplitude $I_{damp}$ increases. The q-axis current control unit 107 may increase the proportional gain Kpq and the integral gain Kiq stepwise or continuously as the amplitude $I_{damp}$ increases.

The sixth embodiment makes it possible to, even if the inductance of the rotating electric machine 40 changes depending on a change in the magnitudes of the command currents, maintain the response characteristics of the current control at a high level.

Seventh embodiment

The following describes the seventh embodiment while mainly focusing on the different points from the sixth embodiment with reference to the accompanying drawings.

The d- and q-axis current control units 106 and 107 of the seventh embodiment use the magnitude of the d-axis fundamental command current $I_{dbref}$ and the magnitude of the q-axis fundamental command current $I_{qbref}$ in place of the magnitude of the amplitude $I_{damp}$ of the d-axis high-frequency command current $I_{dhref}$.

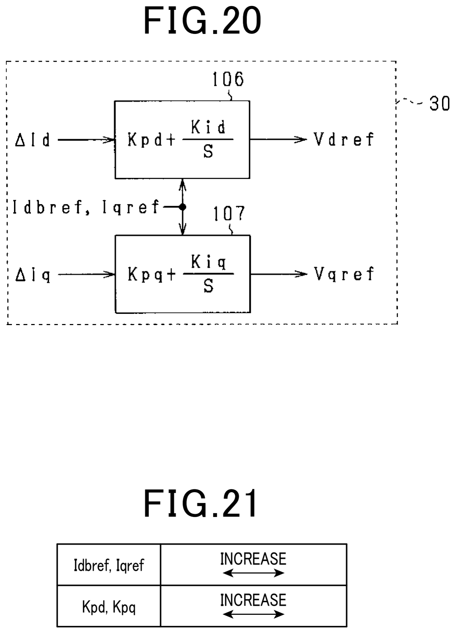

More specifically, as illustrated in Figs. 20 and 21, the d-axis current control unit 106 increases the proportional gain Kpd and the integral gain Kid used in the proportional-integral control as the magnitude of each of the d-axis fundamental command current $I_{dbref}$ and the q-axis fundamental command current $I_{qbref}$ increases. The q-axis current control unit 107 increases the proportional gain Kpq and the integral gain Kiq used in the proportional-integral control as the magnitude of each of the d-axis fundamental command current $I_{dbref}$ and the q-axis fundamental command current $I_{qbref}$ increases.

The seventh embodiment makes it possible to, even if the inductance of the rotating electric machine 40 changes depending on a change in the magnitudes of the command currents, maintain the response characteristics of the current control at a high level.

Other embodiments or modifications

The above embodiments may be modified and implemented as follows.

A high-frequency current (specifically, a high-frequency excitation current) to be supplied to the stator winding 52 is not limited to a harmonic current whose variation frequency is N times the frequency of the fundamental-wave current (where N is an integer of 2 or greater). As long as the variation frequency is higher than the frequency of the fundamental-wave current, the variation frequency may be different from N times the frequency of the fundamental-wave current.

The second winding portion 71b may be arranged radially closer to the stator 50 than the first winding portion 71a is.

The capacitor 81 constituting the resonant circuit of the rotor 60 may be electrically connected in parallel with the first winding portion 71a instead of the second winding portion 71b.

The resonant circuit of the rotor 60 may not include the capacitor 81.

The rotary electric machine is not limited to an inner-rotor rotary electric machine, and may be an outer-rotor rotary electric machine. In this modification, the main pole portions protrude radially inward from the rotor core.

The rotary electric machine is not limited to a star-connected rotary electric machine, and may be a delta-connected rotary electric machine.

In the first embodiment, the stator core may be a toothless stator core in which no teeth are provided.

Each of the rotary electric machines is not limited to be used as an in-vehicle main drive unit, and may be, for example, a rotary electric machine used as an ISG (Integrated Starter Generator) that serves as both a motor and a generator.

A mobility system in which each of the control systems is installed is not limited to a road vehicle and may be, for example, an aircraft or a ship. Additionally, the control system is not limited to a system installed in a mobility system, and may be a stationary system.

The control apparatuses and their control methods according to the present disclosure can be implemented by a dedicated computer including a memory and a processor programmed to perform one or more functions embodied by one or more computer programs.

The control apparatuses and their control methods according to the present disclosure can also be implemented by a dedicated computer including a processor comprised of one or more dedicated hardware logic circuits.

The control apparatuses and their control methods according to the present disclosure can further be implemented by a processor system comprised of a memory, a processor programmed to perform one or more functions embodied by one or more computer programs, and one or more hardware logic circuits.

The one or more programs can be stored in a computer-readable non-transitory storage medium as instructions to be carried out by a computer or a processor.

While illustrative embodiments of the present disclosure have been described herein, the present disclosure is not limited to the embodiments described herein or disclosed configurations, but includes various modifications and adaptations and/or alternations within the equivalent scope of the descriptions. Additionally, various combinations, embodiments, combinations to which only one element or plural elements have been added, or modified embodiments to which only one element or plural elements have been added are within the category or scope of the present disclosure.

**Claims**

1. A control apparatus applicable to a system that includes (i) a rotary electric machine (40) including a stator (50) equipped with a stator winding (52) and a rotor (60) equipped with a field winding (70) and (ii) an inverter (20) electrically connected to the stator winding, the rotary electric machine being configured such that application of a high-frequency voltage to the stator winding induces a voltage in the field winding, resulting in a field current flowing therethrough, the control apparatus comprising:

   a switch controller (109) configured to execute switching control of the inverter to apply, to the stator winding, a combined voltage of the high-frequency voltage and a fundamental voltage with a frequency lower than a frequency of the high-frequency voltage; and
   an adjustment unit (102, 121, 130) configured to execute an adjustment task of adjusting an excitation voltage component for the field winding included in the combined voltage to cause an output voltage ($V_{om}$) of the inverter to be equal to or lower than a predetermined limit value ($V_{lim}$).

2. The control apparatus according to claim 1, wherein:
   the adjustment unit (102) is configured to execute, as the adjustment task, a frequency reduction task of reducing, when the output voltage of the inverter is determined to be equal to or greater than the predetermined limit value, the frequency of the high-frequency voltage to cause the output voltage of the inverter to be equal to or lower than the predetermined limit value.

3. The control apparatus according to claim 1, wherein:
   the adjustment unit (102) is configured to execute, as the adjustment task, an amplitude reduction task of reducing, when the output voltage of the inverter is determined to be equal to or greater than the predetermined limit value, an amplitude of the high-frequency voltage to cause the output voltage of the inverter to be equal to or lower than the predetermined limit value.

4. The control apparatus according to claim 2, wherein:
the adjustment unit (102) is configured to execute, as the adjustment task, in addition to the frequency reduction task, an amplitude reduction task of reducing, when the output voltage of the inverter is determined to exceed the predetermined limit value after execution of the frequency reduction task, an amplitude of the high-frequency voltage.

5. The control apparatus according to claim 2, wherein:
the system includes a current sensor (21) for measuring a stator current flowing through the stator winding, the control apparatus further comprising:

    a two-phase converter (100) configured to convert, based on a measurement value of the current measured by the current sensor, three-phase currents of the stator current in a three-phase stationary coordinate system into a d-axis current and a q-axis current ($I_{dr}$, $I_{qr}$) in a two-phase coordinate system of the rotary electric machine;
    a superimposition unit (103) configured to superimpose a d-axis high-frequency command current ($I_{dhref}$) that is an alternating-current component corresponding to the high-frequency voltage on a d-axis fundamental command current ($I_{dbref}$) that is a direct-current component corresponding to the fundamental voltage to thereby calculate a d-axis command current ($I_{dref}$);
    a d-axis current controller (106) configured to calculate a d-axis voltage command value ($V_{dref}$) to be applied to the stator winding for controlling the converted d-axis current to the d-axis command current; and
    a q-axis current controller (107) configured to calculate a q-axis voltage command value ($V_{qref}$) to be applied to the stator winding for controlling the converted q-axis current to the q-axis command current, wherein:

        the switch controller is configured to execute the switching control of the inverter based on the calculated d- and q-axis voltage command values; and
        the adjustment unit (102) is configured to:

            calculate, based on the calculated d- and q-axis voltage command values, a voltage amplitude ($V_{om}$) as a magnitude of a vector of the output voltage of the inverter; and
            execute, as the frequency reduction task, a task of reducing, when the calculated voltage amplitude is determined to be equal to or greater than the predetermined limit value, the frequency of the high-frequency voltage to cause a deviation between the calculated voltage amplitude and the predetermined limit value to approach 0.

6. The control apparatus according to claim 3, wherein:
the system includes a current sensor (21) for measuring a stator current flowing through the stator winding, the control apparatus further comprising:

    a two-phase converter (100) configured to convert, based on a measurement value of the current measured by the current sensor, three-phase currents of the stator current in a three-phase stationary coordinate system into a d-axis current and a q-axis current ($I_{dr}$, $I_{qr}$) in a two-phase coordinate system of the rotary electric machine;
    a superimposition unit (103) configured to superimpose a d-axis high-frequency command current ($I_{dhref}$) that is an alternating-current component corresponding to the high-frequency voltage on a d-axis fundamental command current ($I_{dbref}$) that is a direct-current component corresponding to the fundamental voltage to thereby calculate a d-axis command current ($I_{dref}$);
    a d-axis current controller (106) configured to calculate a d-axis voltage command value ($V_{dref}$) to be applied to the stator winding for controlling the converted d-axis current to the d-axis command current; and
    a q-axis current controller (107) configured to calculate a q-axis voltage command value ($V_{qref}$) to be applied to the stator winding for controlling the converted q-axis current to the q-axis command current, wherein:

        the switch controller is configured to execute the switching control of the inverter based on the calculated d- and q-axis voltage command values; and
        the adjustment unit (102) is configured to:

            calculate, based on the calculated d- and q-axis voltage command values, a voltage amplitude ($V_{om}$) as a magnitude of a vector of the output voltage of the inverter; and
            execute, as the amplitude reduction task, a task of reducing, when the calculated voltage amplitude is determined to be equal to or greater than the predetermined limit value, the amplitude of the high-frequency voltage to cause a deviation between the calculated voltage amplitude and the predetermined limit value to approach 0.

7. The control apparatus according to claim 2, wherein:

the system includes a voltage sensor (23) for measuring each-phase output voltage of the inverter as the output voltage of the inverter; and
the adjustment unit (102) is configured to:

calculate, based on each-phase output voltage of the inverter measured by the voltage sensor, a voltage amplitude ($V_{om}$) as a magnitude of a vector of the output voltage of the inverter; and
execute, as the frequency reduction task, a task of reducing, when the calculated voltage amplitude is determined to be equal to or greater than the predetermined limit value, the frequency of the high-frequency voltage to cause a deviation between the calculated voltage amplitude and the predetermined limit value to approach 0.

8. The control apparatus according to claim 3, wherein:

the system includes a voltage sensor (23) for measuring each-phase output voltage of the inverter as the output voltage of the inverter; and
the adjustment unit (102) is configured to:

calculate, based on each-phase output voltage of the inverter measured by the voltage sensor, a voltage amplitude ($V_{om}$) as a magnitude of a vector of the output voltage of the inverter; and
execute, as the amplitude reduction task, a task of reducing, when the calculated voltage amplitude is determined to be equal to or greater than the predetermined limit value, the amplitude of the high-frequency voltage to cause a deviation between the calculated voltage amplitude and the predetermined limit value to approach 0.

9. The control apparatus according to claim 1, wherein:

the adjustment unit (121) is configured to execute, as the adjustment task, a task of calculating, based on map information, a value of a d-axis high-frequency command current ($I_{dhref}$) that is an alternating-current component corresponding to the high-frequency voltage to cause the output voltage of the inverter to be equal to or lower than the predetermined limit value,
the map information being information in which values of a determination parameter, values of an amplitude of the d-axis high-frequency command current, and values of a variation frequency of the d-axis high-frequency command current are associated with one another,
the determination parameter including at least one of a power supply voltage ($V_{dc}$) to the inverter, an angular velocity ($\omega_e$) of the rotor, and command torque ($T_{ref}$) of the rotary electric machine.

10. The control apparatus according to claim 1, wherein:
the adjustment unit (130) is configured to execute, as the adjustment task, a task of increasing, when the output voltage of the inverter is determined to be equal to or greater than the predetermined limit value, a d-axis current $I_{dL}$ supplied to flow through the stator winding to cause the output voltage of the inverter to be equal to or lower than the predetermined limit value.

11. The control apparatus according to claim 1, wherein:

the system includes a current sensor (21) for measuring a stator current flowing through the stator winding;
the switch controller is configured to calculate, for each control cycle, a drive signal for the inverter, the drive inverter causing the combined voltage to be applied to the stator winding; and
the adjustment unit (102) is configured to repeatedly execute, within each control cycle, a task as the amplitude reduction task of calculating a d-axis high-frequency command current ($I_{dhref}$) that is an alternating-current component corresponding to the high-frequency voltage to thereby cause the output voltage of the inverter to be equal to or lower than the predetermined limit value.

12. The control apparatus according to any one of claims 1 to 11, wherein:
the system includes a current sensor (21) for measuring a stator current flowing through the stator winding, the control apparatus further comprising:

a two-phase converter (100) configured to convert, based on a measurement value of the current measured by the current sensor, three-phase currents of the stator current in a three-phase stationary coordinate system into a d-axis current and a q-axis current ($I_{dr}$, $I_{qr}$) in a two-phase coordinate system of the rotary electric machine;

a superimposition unit (103) configured to superimpose a d-axis high-frequency command current ($I_{dhref}$) that is an alternating-current component corresponding to the high-frequency voltage on a d-axis fundamental command current ($I_{dbref}$) that is a direct-current component corresponding to the fundamental voltage to thereby calculate a d-axis command current ($I_{dref}$);

a d-axis current controller (106) configured to calculate a d-axis voltage command value ($V_{dref}$) to be applied to the stator winding for first feedback control of the converted d-axis current to the d-axis command current; and

a q-axis current controller (107) configured to calculate a q-axis voltage command value ($V_{qref}$) to be applied to the stator winding for second feedback control of the converted q-axis current to the q-axis command current, wherein:

> the switch controller is configured to execute the switching control of the inverter based on the calculated d- and q-axis voltage command values; and
> each of the d- and q-axis current controllers is configured to change, based on a magnitude of an amplitude of the d-axis high-frequency command current, a feedback gain of the corresponding one of the first feedback control and the second feedback control.

13. The control apparatus according to any one of claims 1 to 11, wherein:
the system includes a current sensor (21) for measuring a stator current flowing through the stator winding, the control apparatus further comprising:

> a two-phase converter (100) configured to convert, based on a measurement value of the current measured by the current sensor, three-phase currents of the stator current in a three-phase stationary coordinate system into a d-axis current and a q-axis current ($I_{dr}$, $I_{qr}$) in a two-phase coordinate system of the rotary electric machine;
> a superimposition unit (103) configured to superimpose a d-axis high-frequency command current ($I_{dhref}$) that is an alternating-current component corresponding to the high-frequency voltage on a d-axis fundamental command current ($I_{dbref}$) that is a direct-current component corresponding to the fundamental voltage to thereby calculate a d-axis command current ($I_{dref}$);
> a d-axis current controller (106) configured to calculate a d-axis voltage command value ($V_{dref}$) to be applied to the stator winding for first feedback control of the converted d-axis current to the d-axis command current; and
> a q-axis current controller (107) configured to calculate a q-axis voltage command value ($V_{qref}$) to be applied to the stator winding for second feedback control of the converted q-axis current to the q-axis command current, wherein:

>> the switch controller is configured to execute the switching control of the inverter based on the calculated d- and q-axis voltage command values;
>> the d-axis current controller is configured to calculate the d-axis voltage command value to be applied to the stator winding for the first feedback control of the converted d-axis current to the d-axis command current;
>> the q-axis current controller is configured to calculate the q-axis voltage command value to be applied to the stator winding for the second feedback control of the converted q-axis current to the q-axis command current; and
>> each of the d- and q-axis current controllers is configured to change, based on a magnitude of an amplitude of the d-axis high-frequency command current, a feedback gain of the corresponding one of the first feedback control and the second feedback control.

14. The control apparatus according to any one of claims 1 to 11, wherein:

> the rotor includes a rotor core (61) and main pole portions (62) protruding radially outward from the rotor core and provided at equal intervals in a circumferential direction of the rotor core;
> the field winding has a first winding portion (71a) and a second winding portion (71b) that are electrically connected in series to one another to constitute a series connection member;
> each of the first winding portion and the second winding portion is wound around each of the main pole portions; and
> the rotor includes:

>> a diode (80) electrically connected in parallel with the series connection member of the first and second winding portions; and
a capacitor (81) electrically connected in parallel with any one of the first winding portion and the second winding portion.

15. A program applicable to a system that includes (i) a rotary electric machine (40) including a stator (50) equipped with a stator winding (52) and a rotor (60) equipped with a field winding (70), (ii) an inverter (20) electrically connected to the stator winding, and (iii) a computer (31), the rotary electric machine being configured such that application of a high-frequency voltage to the stator winding induces a voltage in the field winding, resulting in a field current flowing therethrough,

the program causing the computer to execute

switching control of the inverter to apply, to the stator winding, a combined voltage of the high-frequency voltage and a fundamental voltage with a frequency lower than a frequency of the high-frequency voltage; and
an adjustment task of adjusting an excitation voltage component for the field winding included in the combined voltage to cause an output voltage ($V_{om}$) of the inverter to be equal to or lower than a predetermined limit value ($V_{lim}$).

# FIG.1

# FIG.2

# FIG.3

# FIG.4

$$\cdot f1 = \frac{1}{2\pi\sqrt{L1 \times C}}$$

$$\cdot f2 = \frac{1}{2\pi\sqrt{L2 \times C}}$$

# FIG.5

# FIG.6A

FUNDAMENTAL
WAVE

# FIG.6B

HIGH-FREQUENCY
WAVE

0                                                    360 [deg]

# FIG.7

# FIG.8

# FIG.9

START

CALCULATE Vom — S10

CALCULATE $\Delta V$ — S11

CALCULATE Xh — S12

CALCULATE fh AND Idamp BASED ON Xh — S13

CALCULATE Idhref — S14

END

# FIG.10

EP 4 746 284 A1

$$\begin{pmatrix} \cdot V1 < V2 < V3 \\ \cdot T1 > T2 > T3 \end{pmatrix}$$

FIG.11A

FIG.11B

FIG.11C

# FIG.12

START

ACQUIRE EACH PARAMETER ～S20

CALCULATE fh AND Idamp
BASED ON MAP INFORMATION ～S21

CALCULATE Idhref ～S22

END

# FIG.13

# FIG.14

EP 4 746 284 A1

# FIG.15

# FIG.16

```
        ┌─────────────┐
        │    START    │
        └─────────────┘
               │
               ▼
   ┌───────────────────────┐
   │    CALCULATE Vom       │────  S30
   └───────────────────────┘
               │
               ▼
   ┌───────────────────────┐
   │    CALCULATE ΔV        │────  S31
   └───────────────────────┘
               │
               ▼
   ┌───────────────────────┐
   │    CALCULATE Xh        │────  S32
   └───────────────────────┘
               │
               ▼
   ┌───────────────────────┐
   │ CALCULATE IdL BASED ON Xh │────  S33
   └───────────────────────┘
               │
               ▼
   ┌───────────────────────┐
   │    OUTPUT IdL          │────  S34
   └───────────────────────┘
               │
               ▼
        ┌─────────────┐
        │    END      │
        └─────────────┘
```

# FIG.17

START

CALCULATE Idref, Iqref — S40

CALCULATE Vdref, Vqref — S41

CALCULATE Vom — S42

S43

Vom ≥ Vlim ? — NO

YES

CALCULATE Idhref (Idamp, fh DECREASING) — S46

CALCULATE Idref, Iqref — S47

CALCULATE Vdref, Vqref — S48

CALCULATE Vom — S49

S50

NO — Vom ≤ Vlim ?

YES

CALCULATE VUref, VVref, VWref — S44

GENERATE DRIVE SIGNAL — S45

END

# FIG.18

# FIG.19

| Idamp | INCREASE ← → |
|---|---|
| Kpd, Kpq | INCREASE ← → |

# FIG.20

# FIG.21

| Idbref, Iqref | INCREASE ⟷ |
|---|---|
| Kpd, Kpq | INCREASE ⟷ |

## INTERNATIONAL SEARCH REPORT

| International application No. |
| --- |
| **PCT/JP2024/022183** |

| A. | CLASSIFICATION OF SUBJECT MATTER |
| --- | --- |

*H02P 25/03*(2016.01)i
FI: H02P25/03

According to International Patent Classification (IPC) or to both national classification and IPC

| B. | FIELDS SEARCHED |
| --- | --- |

Minimum documentation searched (classification system followed by classification symbols)

H02P25/03

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2007-185082 A (DENSO CORPORATION) 19 July 2007 (2007-07-19) paragraphs [0001]-[0122], fig. 1-36 | 1-15 |
| A | JP 2009-77464 A (DENSO CORPORATION) 09 April 2009 (2009-04-09) paragraphs [0001]-[0105], fig. 1-34 | 1-15 |
| A | JP 2013-197275 A (DENSO CORPORATION) 30 September 2013 (2013-09-30) paragraphs [0001]-[0024], fig. 1-12 | 1-15 |
| A | JP 2010-166787 A (ASMO CO., LTD.) 29 July 2010 (2010-07-29) paragraphs [0001]-[0036], fig. 1-3 | 1-15 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 August 2024** | **27 August 2024** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

### INTERNATIONAL SEARCH REPORT
**Information on patent family members**

International application No.

**PCT/JP2024/022183**

| Patent document cited in search report | | | Publication date (day/month/year) | Patent family member(s) | | | Publication date (day/month/year) |
|---|---|---|---|---|---|---|---|
| JP | 2007-185082 | A | 19 July 2007 | US | 2006/0290316 | A1 | |
| | | | | paragraphs [0001]-[0168], fig. 1-36 | | | |
| | | | | DE | 102006029459 | A1 | |
| | | | | CN | 1933298 | A | |
| JP | 2009-77464 | A | 09 April 2009 | US | 2009/0072777 | A1 | |
| | | | | paragraphs [0001]-[0175], fig. 1-34 | | | |
| JP | 2013-197275 | A | 30 September 2013 | (Family: none) | | | |
| JP | 2010-166787 | A | 29 July 2010 | (Family: none) | | | |

Form PCT/ISA/210 (patent family annex) (July 2022)

35

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023113850 A

- JP H0530774 B